Europäisches Patentamt

European Patent Office

Office européen des brevets

(19)

(11) Numéro de publication : **0 391 791 B1**

## (12) FASCICULE DE BREVET EUROPEEN

(45) Date de publication du fascicule du brevet :
**12.10.94 Bulletin 94/41**

(51) Int. Cl.⁵ : **H02K 21/14, H02K 1/27**

(21) Numéro de dépôt : **90400910.7**

(22) Date de dépôt : **03.04.90**

(54) **Machine polyphasée synchrone à aimants permanents.**

(30) Priorité : **04.04.89 FR 8904414**

(43) Date de publication de la demande :
**10.10.90 Bulletin 90/41**

(45) Mention de la délivrance du brevet :
**12.10.94 Bulletin 94/41**

(84) Etats contractants désignés :
**CH DE ES FR GB IT LI SE**

(56) Documents cités :
**EP-A- 0 198 986**
**WO-A-89/02183**
**DE-A- 2 062 486**
**FR-A- 1 214 249**
**FR-A- 1 272 067**

(73) Titulaire : **Banon, Louis**
**27 Boulevard des Italiens**
**F-75002 Paris (FR)**

(72) Inventeur : **Banon, Louis**
**27 Boulevard des Italiens**
**F-75002 Paris (FR)**

(74) Mandataire : **Polus, Camille et al**
**c/o Cabinet Lavoix**
**2, Place d'Estienne d'Orves**
**F-75441 Paris Cedex 09 (FR)**

## Description

La présente invention est relative à une machine électrodynamique synchrone à aimants permanents comportant un rotor du type à concentration de flux comprenant un arbre ou un moyeu réalisé en matériau amagnétique sur lequel reposent des aimants permanents radiaux parallèlèpipèdiques entre lesquels sont disposées les pièces polaires réalisées en tôle magnétique ferro-silicium et un stator comportant une carcasse réalisée en tôle magnétique ferro-silicium dans laquelle sont formées une pluralité d'encoches semi-fermées délimitées par une culasse statorique qui recoivent des bobinages induits, et qui définit avec le rotor un entrefer.

Dans les machines décrites précédemment, pour obtenir un fort couple massique, on utilise des rotors équipés d'aimants dits à haute énergie, de type terres rares (Samarium Cobalt et plus récemment Néodyme-Fer), faisant parfois appel, dans le meilleur des cas, à une structure de rotor aimanté, connue de l'homme de l'art, la structure à concentration de flux. Cette démarche convient à des machines de couples relativement faibles et tournant à des vitesses élevées, donc entraînant des charges par l'intermédiaire de réducteurs.

Cependant, lorsque l'on désire effectuer l'entraînement direct de charges sans réducteurs, à puissance donnée, le couple nécessaire au niveau du moteur est beaucoup plus élevé que dans la solution à moto-réducteur, on est donc conduit à des machines de dimensions importantes dans lesquelles l'emploi d'aimants terres rares de prix spécifique élevé conduit à un coût très important de la machine dissuadant l'utilisateur d'employer une solution à Entraînement Direct, alors que techniquement, pour des questions de jeu, de raideur, d'augmentation de bande passante d'asservissement, et de simplicité de réalisation mécanique, l'Entraînement Direct est souhaitable.

L'invention a pour objet la réalisation de machines synchrones à aimants permanents à fort couple massique et volumique, tournant à vitesse lente ce qui permet un Entraînement Direct.

L'invention a pour but d'obtenir des rapports élevés de concentration de flux afin d'avoir avec des aimants de type ferrites un flux émanant du rotor proche de celui qu'on obtiendrait avec des aimants terres rares à haute énergie. D'autre part, ces rapports importants de concentration de flux permettent d'obtenir une induction statorique proche de l'induction à saturation. Cela est rendu possible par :

- l'utilisation de rotors de diamètre élevé (supérieur à 100 mm) compatibles pour l'utilisateur avec les couples requis (de 25 Nm à plusieurs centaines de Nm).
- l'utilisation de rotors à concentration de flux à grand nombre de pôles ; les pertes magnétiques restant cependant faibles du fait des faibles vitesses de rotation nécessitées par l'Entraînement Direct (quelques tours/s, généralement moins de 3 trs/s).

Les aimants ferrites sont intéressants du point de vue du coût du fait que leur prix spécifique est de l'ordre du cinquantième de celui des aimants Samarium - Cobalt actuellement, et du vingt-cinquième de celui qu'atteindront après stabilisation les nouveaux aimants terres rares néodymes fer à haute énergie, lesquels présentent des coefficients importants de perte de champ avec l'augmentation de la température. En conséquence, La solution selon l'invention est compétitive par rapport aux solutions traditionnelles à moto-réducteurs.

Notons que le recours à des aimants de type à haute énergie apporterait un surcoût notable avec la même structure, mais n'apporterait pas de gain notable en couple massique car le coefficient de concentration de flux serait inférieur à celui pratiqué pour les ferrites, les tôles magnétiques employées pour le circuit magnétique statorique, saturant magnétiquement autour d'une induction de 2 Tesla déjà atteinte avec la machine selon l'invention.

Pour obtenir ces résultats, la machine selon l'invention est caractérisée en ce que les aimants sont de type ferrites et que le rapport $r_1$ de la hauteur de la section d'un aimant traversée par le flux d'induction divisée par le diamètre d'alésage de l'entrefer est compris entre 0,19 et 0,27.

Selon une autre caractéristique de l'invention, le rapport $r_2$ de la hauteur de la section d'un aimant traversée par le faux d'induction divisée par la longueur d'un demi-arc polaire périphérique du rotor séparant les faces en vis-à-vis de deux aimants consécutifs ou rapport de concentration de flux est compris entre 3,1 et 3,9. Selon une autre caractéristique, le rapport $r_3$ entre le produit du nombre de dents statoriques multiplié par l'épaisseur d'une dent statorique séparant deux encoches consécutives, divisé par 4.P fois la longueur d'un demi-arc polaire périphérique du rotor séparant les faces en vis-à-vis de deux aimants consécutifs, P étant le nombre de paires de pôles de la machine est compris entre 0,75 et 0,95.

Selon une autre caractéristique, le rapport $r_4$ de 4.P fois l'épaisseur radiale de la culasse statorique divisé par le produit du nombre de dents statoriques séparant les encoches statoriques par l'épaisseur d'une dent statorique séparant deux encoches consécutives est compris entre 0,60 et 0,75.

On vient ainsi de définir une série de rapports de dimensionnement $r_1$ à $r_4$ qui permettent à partir du choix initial d'un diamètre d'alésage de déterminer l'ensemble des dimensions de la machine permettant d'obtenir un couple massique maximum avec l'utilisation de tôles magnétiques ferro-silicium et d'aimants ferrites. Cette série de rapports optimaux conduit à une structure de rotor à aimants quasi-jointifs à leur extrémité inférieure.

On décrira maintenant l'invention en se référant aux dessins annexés dans lesquels :

- la figure 1 est une vue en coupe axiale d'une machine électrodynamique synchrone.
- la figure 2 est une vue schématique en coupe transversale du rotor et de la carcasse d'une machine électrodynamique réalisée conformément aux enseignements de la présente invention.

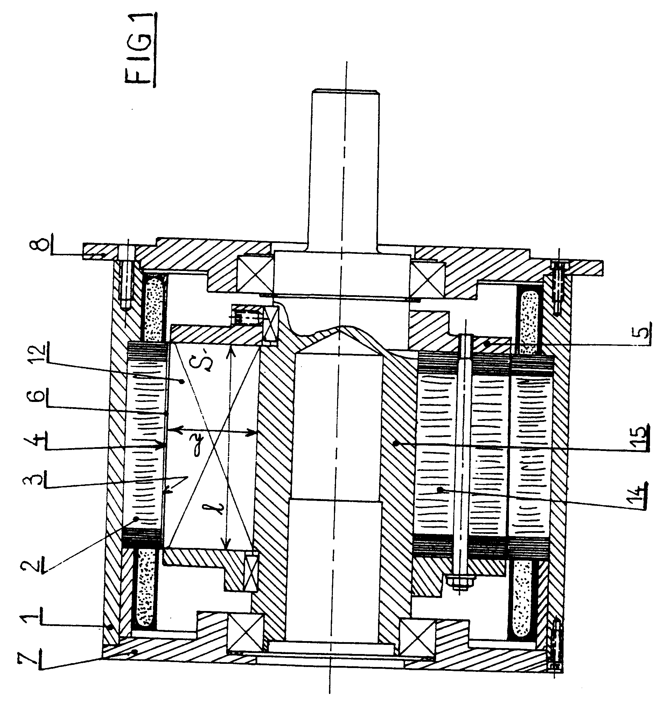

On a représenté à la figure 1 une coupe axiale d'un moteur synchrone.

Le moteur comprend essentiellement un carter (1) dans lequel est monté un stator (2) dont la paroi périphérique interne (3) coopère avec la paroi périphérique externe (4) d'un rotor (5) monté dans le carter (1) pour définir entre elles un entrefer (6). Le rotor (5) est monté tournant dans le carter (1) au moyen de deux paliers (7) et (8) comportant chacun un roulement.

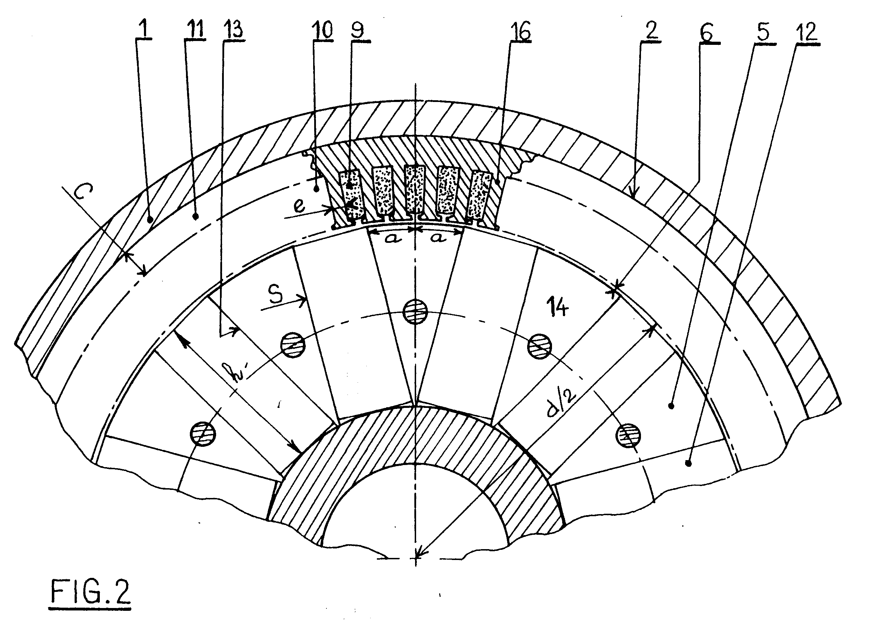

Le stator (2) représenté aux figures 1 et 2 comprend un enroulement principal de stator (9) disposé dans les encoches (10) semi-fermées délimitées par une culasse statorique (11).

Le rotor (5) comprend également des aimants (12) montés dans des encoches radiales (13).

Dans le cadre de la présente invention, les tôles magnétiques dans lesquelles sont réalisées les pièces polaires (14) et la culasse (11) sont des tôles ordinaires en alliage de ferro-silicium.

Chacun des aimants du rotor a une forme générale parallélépipédique rectangle et prend appui sur l'arbre ou moyeu amagnétique (15).

Les aimants utilisés sont des aimants ferrites. Dans le mode de réalisation présenté, les aimants sont chacun constitués d'une pluralité d'aimants élémentaires parallélépipédiques (12) assemblés entre eux et ce pour des facilités de fabrication.

Chaque aimant est aimanté tangentiellement, c'est-à-dire que les lignes de flux sortant par une section latérale S d'un aimant sont sensiblement perpendiculaires aux rayons du rotor. Conformément à l'invention et afin d'obtenir la saturation magnétique maximale, la machine électrodynamique est dimensionnée de façon que le rapport r1 défini par la formule r1 $= \dfrac{h}{d}$ dans laquelle

- h est la hauteur radiale de la section S d'un aimant (12) traversée par le flux d'induction, et
- d est le "diamètre d'alésage" ou diamètre moyen de l'entrefer (6) de la machine électrodynamique, est compris entre 0,19 et 0,27 aux détails de réalisation près.

Selon une autre caractéristique de l'invention le rapport r2 défini par la formule R2 $= \dfrac{b}{a}$ dans laquelle

- a est la longueur d'un demi-arc polaire périphérique externe du rotor (5) séparant les faces S en vis-à-vis de deux aimants consécutifs (12), est compris entre 3, 1 et 3,9.

Selon une autre caractéristique de l'invention, le rapport r3 défini par la formule r3 $= \dfrac{n.e}{4.P.a}$ dans laquelle

- n est le nombre de dents statoriques (16) séparant les encoches statoriques (10).
- e est l'épaisseur d'une dent statorique (16) séparant deux encoches statoriques consécutives (10).
- P est le nombre de paires de pôles magnétiques, est compris entre 0,75 et 0,95.

Selon un mode de réalisation préférentiel, le nombre de paires de pôles est égal à 6, le nombre de dents statoriques (16) est égal à 72.

Selon une autre caractéristique de l'invention, le rapport r4 défini par la formule r4 $= \dfrac{4.P.c}{n.e}$ dans laquelle

c est l'épaisseur radiale de la culasse statorique (11) délimitant les encoches statoriques (10), est compris entre 0,60 et 0,75.

## Revendications

1. Machine électrodynamique synchrone à aimants permanents comportant un rotor (5) du type à concentration de flux comprenant un arbre ou un moyeu (15) réalisé en matériau amagnétique sur lequel reposent des aimants permanents radiaux parallélépipédiques (12) entre lesquels sont disposées les pièces polaires (14) réalisées en tôle magnétique ferrosilicium et un stator (2) comportant une carcasse réalisée en tôle magnétique ferro-silicium dans laquelle sont formées une pluralité d'encoches (10) semi-fermées délimitées par une culasse statorique (11) qui recoivent des bobinages induits (9) et qui définit avec le rotor (5) un entrefer (6) caractérisée en ce que les aimants (12) sont de type ferrites et que le rapport r1 de la hauteur (h) de la section (S) d'un aimant (12) traversée par le flux d'induction divisée par le diamètre d'alésage (d) de l'entrefer est compris entre 0,19 et 0,27.

2. Machine selon la revendication 1 caractérisée par le fait que le rapport r2 de la hauteur (h) de la section (S) d'un aimant traversée par le flux d'induction divisée par la longueur (a) d'un demi-arc polaire périphérique du rotor (5) séparant les faces en vis-à-vis de deux aimants (12) consécutifs ou rapport de concentration de flux est compris entre 3,1 et 3,9.

3. Machine selon l'une quelconque des revendications précédentes, caractérisée par le fait que le rapport r3 entre le produit du nombre (n) de dents statoriques (16) multiplié par l'épaisseur (e) d'une dent statorique (16) séparant deux encoches consécutives (10) divisé par 4.P fois la longueur (a) d'un demi-arc polaire périphérique du rotor (5) séparant les faces en vis-à-vis de deux aimants consécutifs (12), P étant le nombre de paires de pôles magnétiques, est compris entre 0,75 et 0,95.

4. Machine selon l'une quelconque des revendications précédentes, caractérisée par le fait que le rapport r4 de 4.P fois l'épaisseur radiale (c) de la culasse statorique (11) divisé par le produit du nombre (n) de dents statoriques (16) séparant les encoches statoriques (10) par l'épaisseur (e) d'une dent statorique (16) séparant deux encoches consécutives (10) est compris entre 0,60 et 0,75.

5. Machine selon l'une quelconque des revendications précédentes caractérisée par le fait que le nombre P de paires de pôles magnétiques est égal à 6.

**Patentansprüche**

1. Elektrodynamische Synchronmaschine mit Dauermagneten mit einen Rotor (5) mit Konzentration des Magnetflusses, welcher eine Welle oder Nabe (15) aufweist, die aus einem nichtmagnetischen Werkstoff hergestellt ist und auf der radiale parallelepipedische Dauermagneten (12) aufliegen, zwischen denen Polteile (14) aus einem magnetischen Blech aus Ferrosilizium und ein Stator (2) angeordnet sind, welcher eine Karkasse aus einem magnetischen Blech aus Ferrosilizium aufweist, in das eine Vielzahl von halbgeschlossenen Einkerbungen (10) eingebracht sind, welche durch ein Statorgehäuse (11) eingegrenzt sind und in die Induktionswicklungen (9) eingesetzt sind und der zusammen mit dem Rotor (5) einen Luftspalt (6) bildet, **dadurch gekennzeichnet, daß** die Magneten (12) aus Ferrit hergestellt sind und daß das Verhältnis r1 der Höhe (h) des Querechnittes (S) eines Magneten (12), welcher von den Induktionsfluß durchquert wird, geteilt durch den Bohrungsdurchmesser (d) des Luftspaltes zwischen 0,19 und 0,27 liegt.

2. Maschine nach Anspruch 1, **dadurch gekennzeichnet, daß** das Verhältnis r2 der Höhe (h) des Querschnittes (S) eines Magneten, welcher von dem Induktionsfluß durchquert wird, geteilt durch die Länge (a) eines peripheren polaren Kreisbogens des Rotors (5), welcher die gegenüberliegenden Flächen von zwei aufeinanderfolgenden Magneten (12) trennt, oder das Verhältnis der Konzentration des Magnetflusses zwischen 3,1 und 3,9 liegt.

3. Maschine nach einem der vorstehenden Ansprüche, **dadurch gekennzeichnet, daß** das Verhältnis r3 zwischen dem Produkt der Anzahl (n) der Statorzähne (16), multiplitziert mit der Dicke (e) eines Statorzahnes (16), welcher zwei aufeinanderfolgende Einkerbungen (10) unterteilt, geteilt durch 4.P mal die Länge (a) eines peripheren polaren Halbkreisbogens des Rotors (5), welcher die jeweils gegenüberliegenden Flächen von zwei aufeinanderfolgenden Magneten (12) trennt, wobei P die Anzahl der magnetischen polpaare bezeichnet, zwischen 0,75 und 0,95 liegt.

4. Maschine nach einem der vorstehenden Ansprüche, **dadurch gekennzeichnet, daß** das Verhältnis r4 von 4.P mal der radialen Dicke (c) des Statorgehäuses (11), geteilt durch das Produkt der Anzahl (n) der Statorzähne (16), welche die Statorkerben (10) durch die Dicke (e) eines Statorzahnes (16) unterteilen, welcher zwei aufeinanderfolgende Einkerbungen (10) trennt, zwischen 0,60 und 0,75 liegt.

5. Maschine nach einem der vorstehenden Ansprüche, **dadurch gekennzeichnet, daß** die Anzahl P der magnetischen Polpaare insgesamt 6 beträgt.

**Claims**

1. A synchronous electrodynamic machine with permanent magnets comprising a rotor (5) of the flux concentration type comprising a shaft or a hub (15) constructed in non-magnetic material on which rest parallelepipedic radial permanent magnets (12) between which are disposed the polar pieces(14) constructed in ferrosilicon magnetic sheet and a stator (2) comprising a frame constructed in ferrosilicon magnetic sheet in which are formed a plurality of semi-closed slots (10) delimited by a stator yoke (11) which receive armature windings (9) and which defines with the rotor (5) an air gap (6) characterised in that the magnets (12) are of ferrite type and in that the ratio r1 of the height (h) of the section (S) of a magnet (12) through which passes the induction flux divided by the bore diameter (d) of the air gap is between 0.19 and 0.27.

2. The machine according to Claim 1 characterised in that the ratio r2 of the height (h) of the section (S) of a magnet through which passes the induction flux divided by the length (a) of a peripheral polar half-arc of the rotor (5) separating the opposite faces of two consecutive magnets (12) or flux concentration ratio is between 3.1 and 3.9.

3. The machine according to any one of the preceding claims, characterised in that the ratio r3 between the product of the number (n) of stator teeth (16) multiplied by the thickness (e) of one stator tooth (16) separating two consecutive slots (10) divided by 4.P times the length (a) of a peripheral polar half-arc of the rotor (5) separating the opposite faces of two consecutive magnets (12), P being the number of pairs of magnetic poles, is between 0.75 and 0.95.

4. The machine according to any one of the preceding claims characterised in that the ratio r4 of 4.P times the radial thickness (c) of the stator yoke (11) divided by the product of the number (n) of stator teeth (16) separating the stator slots (10) by the thickness (e) of one stator tooth (16) separating two consecutive slots (10) is between 0.60 and 0.75.

5. The machine according to any of the preceding claims characterised in that the number P of pairs of magnetic poles is equal to 6.

EP 0 391 791 B1

FIG 1

6

FIG.2

EP 0 391 791 B1